# EUROPEAN PATENT APPLICATION

(11) **EP 3 447 524 A1**
(43) Date of publication of application: **27.02.2019**
(21) Application number: 18188258.0
(22) Date of filing: 09.08.2018
(51) Int. Cl.: G01S 7/481

(54) **COMPACT THREE-DIMENSIONAL SCANNING LIDAR SENSOR**

(30) Priority: 21.08.2017 KR 20170105671; 02.11.2017 KR 20170145577; 23.10.2017 KR 20170137723; 16.05.2018 KR 20180055952; 26.06.2018 KR 20180073235
(71) Applicant: Yujin Robot Co., Ltd., Incheon 22013 (KR)
(72) Inventor: SHIN, Kyung Chul, 03010 Seoul (KR); PARK, Seong Ju, 15820 Gyeonggi-do (KR); LEE, Jae Young, Gyeonggi-do, 15804 (KR); CHEON, Moo Woong, 13903 Gyeonggi-do (KR); KIM, Man Yeol, 21931 Incheon (KR)
(74) Representative: Capasso, Olga

(57) **Abstract**

An object to be achieved by the present disclosure is to minimize a size of a Lidar sensor which is capable of three-dimensionally scanning, by dividing a transmitter module and a receiver module, reflecting light emitted from a light source or light reflected from a transmission mirror, from a first reflecting area of a sweeping mirror to be moved to a target, disposing a transmitter, a mirror, and a receiver in a specific space to reflect light reflected from the target from a second reflection area of the sweeping mirror to be moved to a transmission mirror or a photo diode, and installing a blocking wall which separates a movement path of the light to remove scattered light.

## Description

### TECHNICAL FIELD

A technical field of the present disclosure relates to a Lidar sensor which scans a three-dimensional space.

### BACKGROUND ART

The contents described in this section merely provide background information on the present exemplary embodiment but do not constitute the related art.

A three-dimensional distance measuring system measures a distance in a space using various sensors such as a charge coupled device (CCD) image sensor, a complementary metal oxide semiconductor (CMOS) image sensor, an ultrasound sensor, and a laser sensor.

A generally three-dimensional distance measuring system rotates a two-dimensional distance sensor which scans a plane including a center of the sensor to scan a space. However, a device using a two-dimensional distance sensor does not limit a cost, a size, and a sampling rate so that there is a limitation in producing the device as a commercial product rather than a research purpose.

A device to which a two-dimensional photo diode array is applied measures a distance using structure light or a time of flight. When the structure light is used, a unique pattern is projected and a corresponding point is detected to calculate a depth and when the time of flight is used, a time difference or a phase difference is measured to be converted into a distance. When the device to which a two-dimensional photo diode array is applied is used, it is difficult to increase an angle of view. Further, each pixel has so many three-dimensional information, so that it is difficult to measure a pin point.

A distance measuring device to which a one-dimensional photo diode array is applied includes a photo diode array and a laser diode array (or a laser diode and a diffuser). The photo diode array has a structure in which hundreds to several thousands of photo diodes are linearly disposed on a silicon crystal. However, the distance measuring device to which a one-dimensional photo diode array is applied has problem in that it is difficult to increase an angle of view and to produce the distance measuring device as a commercial product due to expensive modules required for implementation such as a high efficiency diffuser, a sensor array, or an MEMS mirror.

For easy implementation, the Lidar sensor of the related art employs a specific tube for a transmitter or is implemented to have a structure in which a distance from a transmitter and a receiver to a mirror is ensured to be long. The two-dimensional Lidar sensor of the related art has a laser light tube formed from an emitter to the mirror and a three-dimensional Lidar sensor of the related art employs a beam adjustment method which forms a long distance using a specific tube or uses a multiple mirror generating a long distance in a restricted area.

The Lidar sensor of the related art has an excellent performance but has a disadvantage in terms of a cost and a size. In order to form an efficient beam path, the three-dimensional Lidar sensor of the related art requires a plurality of mirrors having a high reflectance so that it is expensive. Further, the compact Lidar has a limited size so that a tube or long distance method of the related art cannot be applied.

### SUMMARY OF THE INVENTION

An object to be achieved by the present disclosure is to minimize a size of a Lidar sensor which is capable of three-dimensionally scanning, by dividing a transmitter module and a receiver module, reflecting light emitted from a light source or light reflected from a transmission mirror, from a first reflecting area of a moving mirror to be moved to a target, disposing a transmitter, a mirror, and a receiver in a specific space to reflect light reflected from the target from a second reflection area of the moving mirror to be moved to a transmission mirror or a photo diode, and installing a blocking wall which separates a movement path of the light to remove scattered light. Other and further objects of the present disclosure which are not specifically described can be further considered within the scope easily deduced from the following detailed description and the effect.

According to an aspect of the present disclosure, an optical transceiver includes: a first angle adjusting unit including a first reflection area and a second reflection area, an optical transmitting unit which transmits light to the first reflection area of the first angle adjusting unit, an optical receiving unit which receives light from the second reflection area of the first angle adjusting unit, and a light blocking wall which separates a movement path of the transmitted light and a movement path of the received light.

According to another aspect of the present disclosure, a distance measuring apparatus includes: a light source, an optical transceiver which emits light to a target by a start control signal and receives light reflected from the target to convert the reflected light into an electrical signal, a distance measuring unit which converts the electrical signal to generate a stop control signal and calculates a time of flight based on a time difference of the start control signal and the stop control signal to measure a distance in which the optical transceiver includes: a first angle adjusting unit including a first reflection area and a second reflection area, an optical transmitting unit which transmits light to the first reflection area of the first angle adjusting unit, an optical receiving unit which transmits light to the second reflection area of the first angle adjusting unit, and a light blocking wall which separates a movement path of the transmitted light and a movement path of the received light.

According to still another aspect of the present disclosure, a moving object includes: a distance measuring apparatus which calculates a flight time between a moving object and a target to measure a distance to the target; and a moving device which is implemented to move the moving object based on the distance to the target in which the distance measuring apparatus includes an optical transceiver which emits light to a target by a start control signal and receives light reflected from the target to convert the reflected light into an electrical signal and a distance measuring unit which converts the electrical signal to generate a stop control signal and calculates a time of flight based on a time difference of the start control signal and the stop control signal to measure a distance and the optical transceiver includes a first angle adjusting unit including a first reflection area and a second reflection area, an optical transmitting unit which transmits light to the first reflection area of the first angle adjusting unit, an optical receiving unit which transmits light to the second reflection area of the first angle adjusting unit; and a light blocking wall which separates a movement path of the transmitted light and a movement path of the received light.

The light blocking wall may be installed between the optical transmitting unit and the optical receiving unit and forms a blocking area with respect to the first angle adjusting unit such that the light which is transmitted by the optical transmitting unit is reflected or scattered from the first reflection area of the first angle adjusting unit and the reflected or scattered light does not reach the optical receiving unit so that the transmitted light moves through a path to be reflected from the first reflection area and light reflected from a target moves through a path to be reflected from the second reflection area.

The first angle adjusting unit may include a first reflector having the first reflection area and a second reflector having the second reflection area and the first reflector and the second reflector may be located in a first space and a second space separated by the light blocking wall, respectively.

The light blocking wall may form the blocking area using a length relationship including a distance Hb from the first angle adjusting unit to the light blocking wall, a thickness Wb of the light blocking wall, a distance H1 from the first reflection area to the optical transmitting unit, a distance W1 from the light blocking wall including the thickness of the optical transmitting unit to the optical transmitting unit, a distance H2 from the second reflection area to the optical receiving unit, a distance W2 from the light blocking wall including the thickness of the optical receiving unit to the optical receiving unit, a reference angle of the first angle adjusting unit, and a movement angle of the reflector, or a combination hereof.

The first angle adjusting unit may move at a predetermined period to change the normal line of the first reflection area and the normal line of the second reflection area.

The first angle adjusting unit may synchronize a period of the first reflection area and a period of the second reflection area and make a normal line direction of the first reflection area and a normal line direction of the second reflection area parallel to each other.

The first angle adjusting unit may move by a bending motion, a resonant motion, a reciprocating motion, a seesaw motion, a rotational motion, and a combination thereof.

The first angle adjusting unit may include a reflector having the first reflection area and the second reflection area and the reflector may be installed in a frame of the optical transceiver to be movable and move using an electromagnetic force of a magnet attached to the reflector and a coil installed in the frame.

The first angle adjusting unit may include a reflector having the first reflection area and the second reflection area and the reflector may be installed in a frame of the optical transceiver to be movable and move using an electromagnetic force of a magnet installed in the frame and a coil attached to the reflector.

The first angle adjusting unit may include a first reflector having the first reflection area and a second reflector having the second reflection area and the first reflector and the second reflector may be formed to be a polygonal column to move while rotating.

The optical transceiver may further include: a first driver which moves a reflector of the first angle adjusting unit; a first frequency adjusting unit which adjusts a period when the reflector of the first angle adjusting unit moves; a reference angle adjusting unit which adjusts an angle at which the reflector of the first angle adjusting unit is installed, or a combination thereof.

The optical transmitting unit may include a light source which emits light, a transmitting reflector which reflects the light or a combination thereof and the optical receiving unit includes a photo diode which receives light to convert the light into an electrical signal, a receiving reflector which reflects the light, a point adjusting unit which adjusts the number of point group data obtained per unit time by adjusting a light emitting speed of the light source based on a predetermined sampling period, or a combination thereof.

The optical transceiver may further include a second angle adjusting unit.

The second angle adjusting unit may include the optical transmitting unit, the optical receiving unit, a rotor which is attached to the light blocking wall to rotate, a second driver which is connected to the rotor to rotate the rotor, and a rotor connecting unit which connects a base of the optical transceiver and the rotor.

The rotor connecting unit may include a power line to which a conductor is in physical contact with the rotor to transmit power and a data communication unit which is wirelessly connected to the rotor in the rotor to transmit data thereto.

The power line may apply a pressure to a worn portion of the conductor in a direction in which the conductor is in contact.

According to the exemplary embodiments of the present disclosure, it is possible to minimize a size of a Lidar sensor which is capable of three-dimensionally scanning, by dividing a transmitter module and a receiver module, reflecting light emitted from a light source or light reflected from a transmission mirror, from a first reflecting area to be moved to a target, disposing a transmitter, a mirror, and a receiver in a specific space to reflect light reflected from the target from a second reflection area to be moved to a transmission mirror or a photo diode, and installing a blocking wall which separates a movement path of the light to remove scattered light.

Even if the effects are not explicitly mentioned here, the effects described in the following specification which are expected by the technical features of the present disclosure and their potential effects are handled as described in the specification of the present disclosure.

### BRIEF DESCRIPTION OF THE DRAWINGS

FIG. 1 is a block diagram illustrating a moving object according to an exemplary embodiment of the present disclosure;
FIG. 2 is a view illustrating a moving object according to an exemplary embodiment of the present disclosure;
FIG. 3 is a block diagram illustrating a distance measuring apparatus according to another exemplary embodiment of the present disclosure;
FIG. 4 is a view illustrating an echo phenomenon according to an arrangement of a light transmitter, a mirror, and a light receiver;
FIG. 5 is a block diagram illustrating an optical transceiver according to another exemplary embodiments of the present disclosure;
FIG. 6 is a block diagram illustrating an optical transmitting unit of an optical transceiver according to another exemplary embodiments of the present disclosure;
FIG. 7 is a block diagram illustrating an optical receiving unit of an optical transceiver according to another exemplary embodiments of the present disclosure;
FIG. 8 is a block diagram illustrating a first angle adjusting unit of an optical transceiver according to another exemplary embodiments of the present disclosure;
FIGS. 9A to 9D are views illustrating an optical transceiver according to another exemplary embodiments of the present disclosure;
FIGS. 10A to 10D are views illustrating a blocking wall of an optical transceiver according to another exemplary embodiments of the present disclosure;
FIGS. 11A to 11D are views illustrating a first driver of an optical transceiver according to another exemplary embodiments of the present disclosure;
FIG. 12A is a view illustrating a transmission path of an optical transceiver according to another exemplary embodiments of the present disclosure and FIG. 12B is a view illustrating a reception path of an optical transceiver according to another exemplary embodiments of the present disclosure;
FIG. 13 is a view illustrating a structure of an optical transceiver according to another exemplary embodiment of the present disclosure and a moving path of light;
FIG. 14 is a block diagram illustrating a second angle adjusting unit of an optical transceiver according to another exemplary embodiments of the present disclosure;
FIG. 15 is a view illustrating a second angle adjusting unit of an optical transceiver according to another exemplary embodiments of the present disclosure;
FIG. 16 is a view illustrating a rotor connecting unit of an optical transceiver according to another exemplary embodiments of the present disclosure; and
FIG. 17 is a view illustrating three-dimensional information obtained by a distance measuring apparatus according to exemplary embodiments of the present disclosure.

### DETAILED DESCRIPTION

Hereinafter, in the description of the present disclosure, a detailed description of the related known functions will be omitted if it is determined that the gist of the present disclosure may be unnecessarily blurred as it is obvious to those skilled in the art and some exemplary embodiments of the present disclosure will be described in detail with reference to exemplary drawings.

The Lidar sensor according to the present exemplary embodiment may be applied to a distance measuring apparatus or a moving object. That is, the Lidar sensor may be applied to products which require distance measurement, such as small appliances or a moving object such as drones or vehicles. The Lidar sensor is a device which transmits a laser signal, measures a returning time of the reflected signal, and measures a distance to a reflector using a speed of light. The laser signal is converted into an electrical signal by a photo diode. The laser signal may have a predetermined wavelength band. The Lidar sensor may be referred to as an optical transceiver.

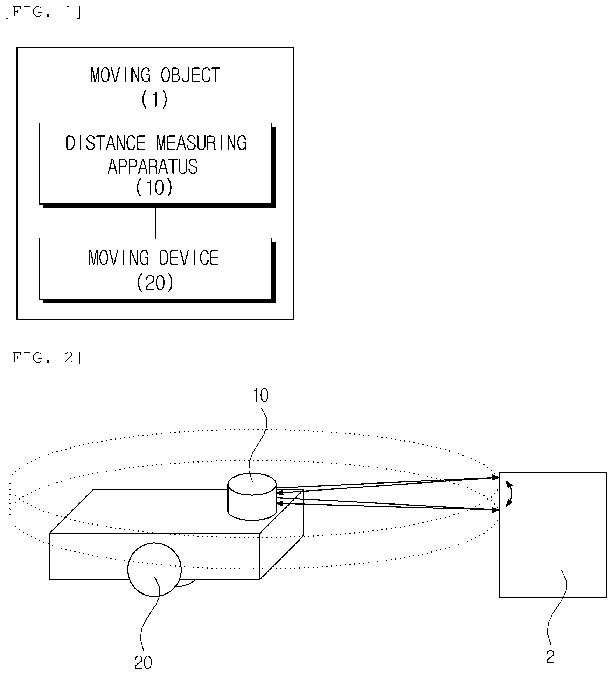

FIG. 1 is a block diagram of a moving object according to an exemplary embodiment of the present disclosure.

As illustrated in FIG. 1, a moving object 1 includes a distance measuring apparatus 10 and a moving device 20. The moving object 1 may omit some components among various components which are exemplarily illustrated in FIG. 1 or may further include other component. For example, the moving object may further include a cleaning unit.

The moving object 1 refers to a device designed to be movable from a specific location to another location according to a predetermined method and moves from the specific location to another location using a moving unit such as wheels, rails, walking legs, wings, or a multi rotor. The moving object 1 may collect external information using a sensor and then move according to the collected information or move using a separate manipulating unit by a user. Examples of the moving object 1 include robot cleaners, toy cars, mobile robots for industrial or military purposes.

The robot cleaner is a device which sucks foreign matters such as dust accumulated on a floor while traveling a cleaning space to automatically clean the cleaning space. Differently from a normal cleaner which moves by an external force provided by a user, the robot cleaner moves using external information or a predetermined moving pattern to clean the cleaning space.

The robot cleaner may automatically move using a predetermined pattern or detect an external obstacles using a detecting sensor and then moves as it is detected. Further, the robot cleaner may move in accordance with a signal transmitted from a remote control device which is manipulated by the user.

The detecting sensor may be implemented by a LIDAR. The LIDAR is a device which transmits a laser signal, measures a returning time of the reflected signal and an intensity, and measures a distance to a reflector using a speed of light. The laser signal is converted into an electrical signal by a photo diode. The laser signal may have a predetermined wavelength band.

FIG. 2 is a view illustrating a moving object according to an exemplary embodiment of the present disclosure.

Referring to FIG. 2, even though the distance measuring apparatus 10 which calculates a time of flight between a moving object and a target to measure a distance to the target is located at an upper edge of the main body, it is merely illustrative and the present disclosure is not limited thereto. Further, one or more distance measuring apparatuses may be implemented in an appropriate location in accordance with a design to be implemented.

The distance measuring apparatus 10 transmits and receives light using a pair of light sources and a photo diode and three-dimensionally scans surroundings using a movable mirror and a rotor.

The distance measuring apparatus 10 may operate by a time of flight (TOF) manner. According to the time of flight manner, a laser emits a pulsed or square wave signal to measure a time when reflection pulses or square wave signals from objects within a measurement range reach a receiver to measure a distance between an object to be measured and the distance measuring apparatus.

The moving device 20 calculates a driving path based on a distance to the target or detects an obstacle to move the moving object. The moving device 20 may move the moving object based on a relative location of an artificial landmark.

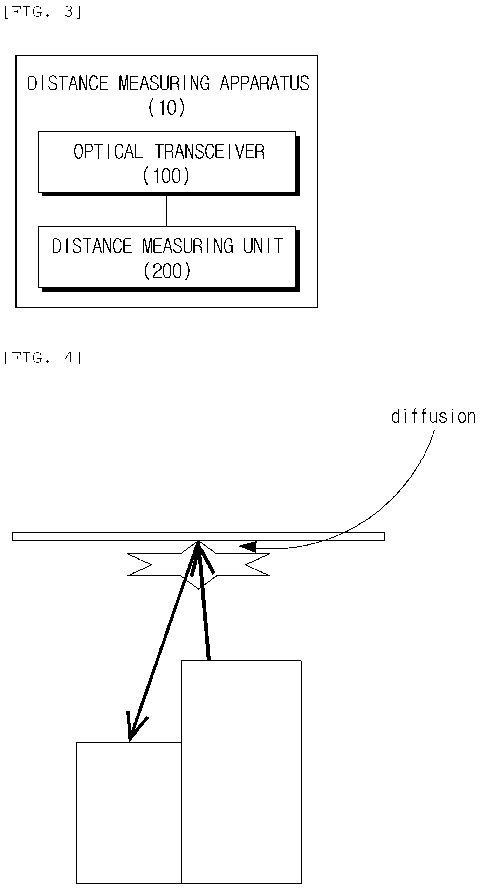

Hereinafter, a distance measuring apparatus which is implemented in a moving object or independently operates will be described with reference to FIG. 3.

FIG. 3 is a block diagram illustrating a distance measuring apparatus. As illustrated in FIG. 3, the distance measuring apparatus 10 includes an optical transceiver 100 and a distance measuring unit 200. The distance measuring apparatus 10 may omit some components among various components which are exemplarily illustrated in FIG. 3 or may further include other component. For example, the distance measuring apparatus 10 may further include an interface.

The optical transceiver 100 transmits a laser signal and receives a reflected signal. The optical transceiver 100 emits light to a target by a start control signal and receives light which is reflected from the target to convert the light into an electrical signal. The optical transceiver 100 outputs the electrical signal during a predetermined detecting time.

The optical transceiver 100 converts light into a current or a voltage so that a circuit for buffering and scaling an output of the photo diode is necessary. For example, a trans impedance amplifier (TIA) may be connected to the photo diode. The trans impedance amplifier amplifies a current of the photo diode and converts the current into the voltage to output the voltage. The trans impedance amplifier may be classified into a resistive feedback TIA (R-TIA) and a capacitive feedback TIA (C-TIA).

The optical transceiver 100 may include a signal converter. The signal converter is connected to the photo diode of the optical transceiver 100 and the trans impedance amplifier is connected to the signal converter.

The light source emits light to the target based on a predetermined sampling period. The sampling period may be set by a controller of the distance measuring apparatus 10. The sampling period is a time when the optical transceiver 100 emits light and receives reflected light, and converts the light into an electrical signal in accordance with the start control signal. The optical transceiver 100 may repeatedly perform this operation in a next sampling period.

The photo diode receives light reflected from the target to convert the light into an electrical signal. The photo diode may be implemented by a PN junction photo diode, a PIN photo diode, or an avalanche photo diode (APD). The photo diode outputs the electrical signal until the photo carrier dissipates. Further, as the magnitude of the output signal is increased, it takes more time until the signal dissipates.

The signal converter outputs the electrical signal during a detecting time of the sampling period so as not to be limited to the dissipation time of the output signal. The signal converter may include a resistor, a switch, and a capacitor.

The resistor is connected to the photo diode. One end of the resistor is connected to the photo diode and the other end of the resistor is connected to the ground. The resistor may be connected to an anode or a cathode of the photo diode.

When a resistance value is small, a waveform has a value which is not zero during a time similar to a time when the light passes through the photo diode, but there is a problem in that a magnitude of the output signal is small. Therefore, it is necessary to amplify a magnitude of the electrical signal using a resistor having a value which is larger than a predetermined value. In this case, a signal trailing phenomenon may be generated.

In order to solve the signal trailing phenomenon, a transmission path of the electrical signal is changed through the switch. The optical transceiver 100 may output a signal from which a part of an area where the magnitude of the electrical signal is reduced is removed. Even though a rear end of the electrical signal is removed, the distance measuring apparatus 10 may measure a distance. This is because the signal discriminator does not detect the ending point of the electrical signal, but detects a start timing and a maximum magnitude timing of the electrical signal to output a rising edge and a falling edge.

The switch is connected to the resistor in parallel to change a transmission path of the electrical signal. For example, the switch may be implemented by a transistor.

The switch transmits (i) the electrical signal to a first path during a detecting time T_{d} of the sampling period Tₛ and transmits (ii) the electrical signal to a second path during a cut-off time T_{c} of the sampling period Tₛ. The first path is a path through which the signal is transmitted through the capacitor and the second path is a path through which the signal is transmitted to the ground through the switch.

Even though signal dissipation times T1, T2, and T3 are taken for the electrical signal output from the photo diode 140 due to the trailing phenomenon, the distance measuring apparatus 10 may process the signal in accordance with the sampling period without waiting until the signal dissipates.

The distance measuring apparatus 10 adjusts the sampling period, calculates and sets an appropriate detecting time in accordance with the sampling period, and control an on/off operation of the switch 152. The controller of the distance measuring apparatus 10 may control an on/off operation of the switch by referring a sampling period, a detecting time, a cut-off time, a waveform of emitted light, an on/off time interval of a light source, a pulse width of a start control signal, a pulse width of a stop control signal, a rotation speed of the optical transceiver, a signal processing and waiting time of the signal discriminator and a time calculator.

The capacitor is connected to a point where the photo diode 140 and the resistor 151 are connected to output an electrical signal. The capacitor removes a DC component of the electrical signal. A non-inverting amplifier may be connected to a rear end of the capacitor.

The distance measuring unit 200 includes one or more signal discriminators which convert an electrical signal to measure an exact timing and output a stop control signal.

The distance measuring unit 200 uses the signal discriminator to convert the electrical signal such that a signal point having a maximum signal magnitude has a predetermined magnitude, adjust an magnitude of the converted electrical signal, and detect a timing having the predetermined magnitude. The signal discriminator converts the electrical signal to generate a stop control signal.

The signal discriminator receives the electrical signal from the photo diode or the trans impedance amplifier. The received electrical signal, that is, an input signal rises or falls by the reflected light. The signal discriminator exactly measures a target timing for the input signal to output the electrical signal.

The input signal has a front end timing T_{front}, target timings T₁ and T₂ which meet a set threshold value, and a peak timing Tₘₐₓ in accordance with the shape of the input signal. The signal discriminator performs two steps of converting process to detect a timing which is the closest to the front end timing T_{front} and the peak timing Tₘₐₓ. The converted signal has a front end timing T_{front}, rising timings T_{rising1} and T_{rising2} which meet the set threshold value, falling timings T_{falling1} and T_{falling2} which meet the set threshold value, and a rear end timing T_{end}. The rear end timing T_{end} is the same timing as the peak timing Tₘₐₓ of the signal before being converted.

The signal discriminator differentiates the input signal or converts the input signal using a constant fraction discriminator (CFD). The constant fraction discriminator is a method which finds a timing when a timing when a signal obtained by delaying an original signal is equal to a signal adjusted by a predetermined magnitude ratio becomes a predetermined ratio of the maximum magnitude.

The signal discriminator measures an exact timing from rising and falling electrical signals to output the signal. The signal discriminator converts the electrical signal and detects a timing having a predetermined reference magnitude to generate a stop control signal. When a slope of the input signal is converted such that a signal point having the maximum signal magnitude has a predetermined magnitude, the rising timings T_{rising1} and T_{rising2} are close to the front end timing T_{front} and the falling timings T_{falling1} and T_{falling2} are close to the rear end timing T_{end}.

The signal discriminator adjusts a magnitude of the converted input signal. The signal discriminator amplifies the magnitude of the converted input signal n times (N is a natural number). The signal discriminator performs a plurality of amplifying processes to convert the slope of the signal to be close to the vertical. Since the slope is large, even though the circuit is simply implemented only by the comparator, an exact timing may be obtained.

The signal discriminator converts the input signal so that a signal point having the maximum signal magnitude has a predetermined magnitude. For example, the signal discriminator converts the signal such that the magnitude of the signal is zero. The distance measuring unit 200 may detect a timing close to the timing having the maximum magnitude by converting the timing having the maximum magnitude into zero to compare the threshold value.

The signal discriminator detects at least one timing having a predetermined reference magnitude from the input signal with an adjusted magnitude to output a signal. Here, there are two types of output signals. For example, the distance measuring unit 200 may output a rising edge and a falling edge.

The distance measuring unit 200 measures a time and a distance by the time of flight manner. The distance measuring unit 200 calculates a time of flight based on a time difference between the start control signal and the stop control signal to measure the distance. The distance measuring unit 200 calculates a distance from the time using the speed of light.

The distance measuring unit 200 may include one or more time to digital converters which convert the difference of two hours into the digital value. The input signal of the time to digital converter may be a pulse shape of the same signal source or may be an edge of other signal source. For example, the distance measuring apparatus 10 may calculate the time difference based on a rising edge or a falling edge of the start control signal and a rising edge or a falling edge of the stop control signal.

The time to digital converter may be configured by a time delay element and a flip flop. The time delay element may be implemented by a digital element using an inverter or an analog element using a current source. Various methods such as a phase difference method, a method using a high resolution clock, and an equivalent time sampling method may be applied to the time to digital converter.

The time to digital converter measures a time using (i) numbers N₁ and N₂ counted by a coarse counter and a fine counter and (ii) a large clock of the coarse counter and a small clock of the fine counter. A time difference between the large clock of the coarse counter and the small clock of the fine counter determines a resolution of the time to digital converter.

The time to digital converter includes a slow oscillator which generates a large clock and a fast oscillator which generates a small clock. The phase detector detects a timing when the large clock and the small clock are synchronized.

In the time to digital converter of the related art, the slow oscillator and the fast oscillator adjust a clock width by adjusting the number of buffers. The time to digital converter of the related art has a resolution of approximately 80 pico seconds (ps) due to a signal delay time of the buffer.

The slow oscillator and the fast oscillator of the time to digital converter change positions and signal paths of gates on the circuit to adjust the clock width. For example, the slow oscillator and the fast oscillator may be combined by the same gates. The slow oscillator and the fast oscillator of the time to digital converter change the positions and signal paths of gates so that the time to digital converter has a resolution of approximately 10 pico seconds (ps).

The time to digital converter processes the rising edge and the falling edge together so that the slow oscillator or the fast oscillator may be designed to be shared.

The interface is a communication path which transmits and receives information to and from other device (or a host). The other device accesses the distance measuring apparatus 10 through an interface to set a parameter. The distance measuring apparatus 10 may transmit the time and the distance measured through the interface to other device.

When a differentiation method in which the distance measuring apparatus 10 is implemented by an RC circuit during a process of converting a slope of the signal is applied, a frequency characteristic of the signal in accordance with the distance change is changed to cause a time error. When a constant fraction discriminator is applied during the process of converting the slope of the signal, charging times of the capacitors of the comparator may vary due to the different slopes of the signal and the time error is incurred due to the different response times of the comparator. Therefore, the distance measuring apparatus 10 performs the process of correcting the time error.

The distance measuring unit 200 corrects the time of flight using the pulse width of the stop control signal. Generally, since the change in the pulse width of the output signal of the photo diode is severe, it is difficult to use the output signal if a pulse width versus a walk error is not close at the time of one to N matching. According to the exemplary embodiment, the process of converting a signal is performed so that the relationship between the pulse width and the walk error may be simply modeled.

The distance measuring unit 200 models a function between the walk error and the pulse width and measures a correction factor in advance. The distance measuring unit 200 applies a correction factor which is inverse proportion to the pulse width to correct the time of flight. When the pulse width is narrowed due to the weak reflected signal, the walk error is increased so that the distance measuring unit 200 sets the correction factor to be large. When the pulse width is widened due to the strong reflected signal, the walk error is reduced so that the distance measuring unit 200 sets the correction factor to be small.

The distance measuring unit 200 calculates the pulse width with respect to the rising edge or the falling edge of the stop control signal and adds the factor value which is applied to a function of the pulse width versus walk error to a time of flight which has not been corrected. The distance measuring apparatus 10 corrects the time of flight using a pulse width of the reflected signal to calculate the exact time of flight.

In order to reduce the size of the Lidar sensor, all components, for example, a transmitter, a mirror, and a receiver need to be closely combined. In order to reduce a size of the optical transceiver, a distance from a transmitter (emitter) and a receiver to the mirror needs to be minimized.

FIG. 4 is a view illustrating an echo phenomenon according to an arrangement of an optical transmitter, a mirror, and an optical receiver. Referring to FIG. 4, both the optical transmitter and the optical receiver are located at a lower portion and the mirror is located at an upper portion, echo problems are incurred due to the positions of the components and the optical path during the process of down-sizing the components. The echo is generated from an optical signal diffused or scattered from the mirror. When the laser signal meets the mirror, a signal which is weakly diffused or reflected is input to the photo diode. The rising edge is delayed due to the weak signal and the falling edge is changed in accordance with the distance to an actual target.

In order to downsize the Lidar sensor, a distance between the transceiver and the mirror needs to be minimized. In order to ensure a vertical field of view, the mirror needs to be moved. However, in this case, a space for moving the mirror needs to be ensured and the echo signal needs to be blocked. To this end, according to the exemplary embodiment, a blocking wall is installed.

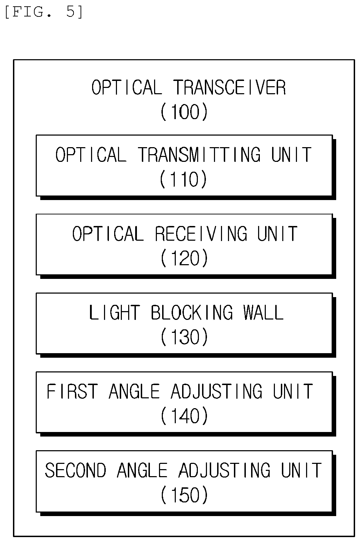

Hereinafter, a structure of an optical transceiver which is capable of performing three-dimensional scanning will be described with reference to FIGS. 5 to 11D.

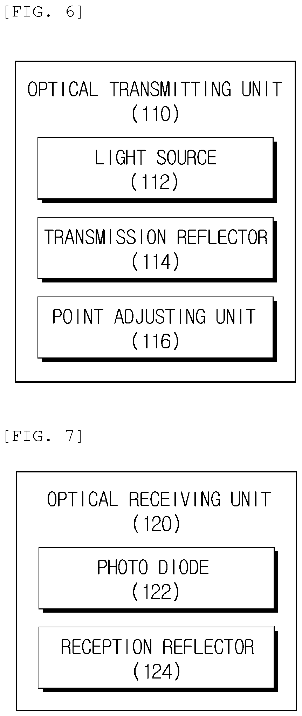

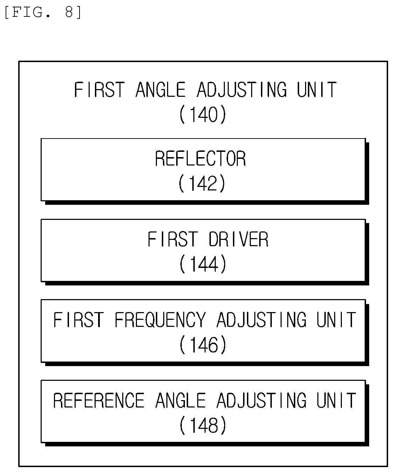

Referring to FIG. 5, the optical transceiver 100 includes an optical transmitting unit 110, an optical receiving unit 120, a light blocking wall 130, a first angle adjusting unit 140, and a second angle adjusting unit 150. The light transceiver 100 may omit some components among various components which are exemplarily illustrated in FIG. 5 or may further include other component. Referring to FIG. 6, the optical transmitting unit 110 may include a light source 112, a transmission reflector 114, and a point adjusting unit 116. Referring to FIG. 7, the optical receiving unit 120 may include a photo diode 122 and a reception reflector 124. Referring to FIG. 8, the first angle adjusting unit 140 may include a reflector 142, the first driver 144, a first frequency adjusting unit 146, and a reference angle adjusting unit 148.

The optical transmitting unit 110 transmits light to a first reflection area 143a of the first angle adjusting unit 140. The optical receiving unit 120 receives light from a second reflection area 143b of the first angle adjusting unit 140. The light blocking wall 130 separates a movement path of light to be transmitted from a movement path of light to be received. The first angle adjusting unit 140 has the first reflection area 143a and the second reflection area 143b, reflects the light, and is installed to be fixed or moveable.

The light source 112 is a device which emits light and transmits light to the first reflection area 143a or a transmission reflector 114. The light source 112 may be implemented by a laser diode LD. The light source 112 may generate a laser pulse signal in nanoseconds. The laser signal may have a predetermined wavelength band. The light source 112 may be connected to the point adjusting unit 112- > 116 which adjusts a speed of a light source which emits light based on a predetermined sampling period to adjust a number of point group data obtained per unit time. For example, the point adjusting unit 116 may set an emitting speed of the light source 112 to obtain 10 K to 20 K points per second.

The photo diode 122 is a device which receives light reflected from the second reflection area mirror 143b or a reception reflector 124 to convert the light into an electrical signal. A principle that when light having a photon energy strikes a diode, moving electrons and positive charge holes are generated so that electrons move may be applied to the photo diode 140. The photo diode 140 may be implemented by a PN junction photo diode, PIN photo diode, or an avalanche photo diode (APD).

The transmission reflector 114, the reception reflector 124, and the reflector may be implemented by mirrors. Lenses 113 and 123 may be located between the movement paths of the light. The optical transceiver 100 may split or condense light or form parallel light using lenses. The optical transceiver 100 may include a transmission optical unit and a reception optical unit. The transmission optical unit and the reception optical unit are paths of the laser signal and may be formed to have a body tube structure.

The reflector 142 includes the first reflection area 143a and the second reflection area 143b. The first reflection area 143a reflects light transmitted by the optical transmitting unit 110 onto a target. The second reflection area 143b reflects light reflected from the target to the optical receiving unit 120. Even though a part of light transmitted by the optical transmitting unit 110 is diffused, scattered, or reflected in the first reflection area 143a, the light blocking wall 130 blocks a path through which the diffused, scattered, or reflected light moves to the optical receiver 143b.

The first angle adjusting unit 140 may include a first driver 144 which moves a reflector 142 of the first angle adjusting unit 140, a first frequency adjusting unit 146 which adjusts a period when the reflector 142 of the first angle adjusting unit 140 moves, and a reference angle adjusting unit 148 which adjusts an angle at which the reflector 142 of the first angle adjusting unit 140 is installed, or a combination thereof.

The first driver 144 changes a slope of a normal line of the reflector 142 by adjusting the reflector 142 at a predetermined period. The reflector 142 is a movable mirror and may move by a bending motion, a resonant motion, a reciprocating motion, a seesaw motion, a rotational motion, and a combination thereof. For example, the reflector may be implemented by a swing mirror.

The first frequency adjusting unit 146 may change a period when the reflector 142 vertically moves. The vertical frequency adjusting unit 146 may set the reflector 142 to oscillate or rotate at 200 to 300 Hz.

The reference angle adjusting unit 148 sets the normal line of the reflector 142 to be -55 degrees with respect to a horizontal plane so that the reflector 142 is inclined at an inclination of 45 degrees. An end or an upper end of the light blocking wall 130 may be obliquely formed. The reference angle adjusting unit 148 may set a reference angle to install the reflector 142 in the frame in consideration of a position where the reflector 142 abuts against the end of the light blocking wall 130 and a maximum movement angle.

The optical transceiver 100 adjusts a movement path and an angle of the light using the reflector 142 which is moving to ensure the vertical field of view. Therefore, a pin point may be measured, which is different from a device of the related art which is implemented by a single lens and a photodiode array.

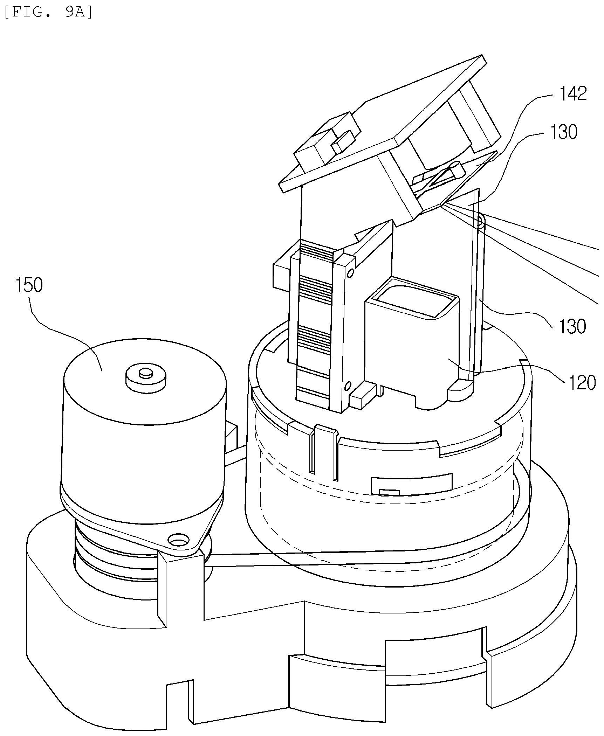

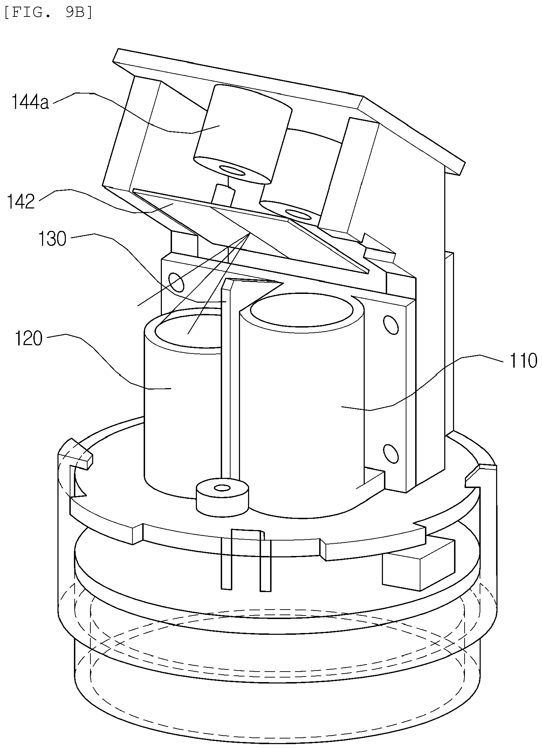

Referring to FIGS. 9A to 9D, the optical transceiver 100 may be implemented by one reflector 142 or may be implemented by two reflectors 142a and 142b. One reflector 142 is divided into the first reflection area 143a and the second reflection area 143b. Two reflectors 142a and 142b include the first reflection area 143a and the second reflection area 143b, reflectively. The reflector 142 is designed to move at a predetermined angle in a predetermined direction. The reflector 142 may vertically sweep.

The optical transmitting unit 110 and the optical receiving unit 120 include lenses 113 and 123. When a short focus lens is used as a lens of the transmitter and the receiver, it may be difficult to adjust an exact focal point. Desirably, a lens having a normal focal length and a lens tube ray may be mounted on an interface board.

The optical transceiver 100 changes an electromagnetic force of a coil 144a to adjust a magnitude and a direction of a force of a magnet attached to the reflector 142. A shape, a size, and a height of the light blocking w all 130 are determined in consideration of the reference angle of the reflector 142 and the movement angle of the reflector 142. For example, the light blocking wall 130 may be formed to be bent or partially protrude.

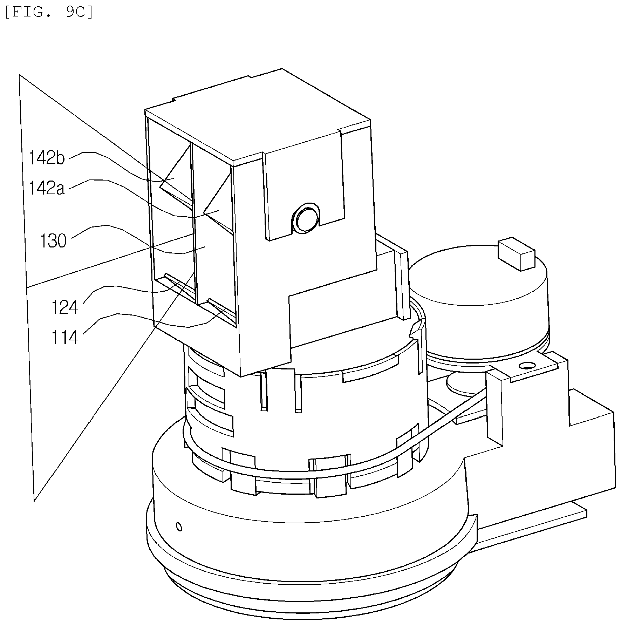

Referring to FIG. 9C, in the exemplary embodiment, a transmission path of light and a reception path of light are completely separated from each other by the light blocking wall 130. That is, the transmitter module and the receiver module are located in specific spaces divided by the light blocking wall 130. The transmitter module and the receiver module may include sweeping mirrors, respectively. The first angle adjusting unit includes a first reflector having a first reflection area and a second reflector having a second reflection area. The first reflector and the second reflector may be located in spaces (a first space and a second space) separated by the light blocking wall.

Even though in FIG. 9C, a rectangular mirror is illustrated, various shapes of mirrors having an appropriate size and shape in accordance with a design may be used. The transmitter module and the receiver module may include fixed mirrors 114 and 124, respectively.

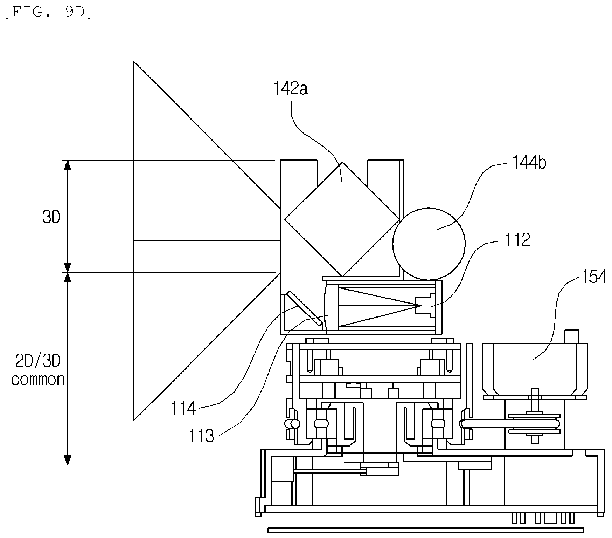

Referring to FIG. 9D, the optical transceiver 100 moves the switching mirror 142a using a motor 144b. The beam output from the transmitter is directed to the switching mirror. The sweeping mirror may be a polygonal mirror and the sweeping mirror rotates to redirect a direction of beam.

The three-dimensional Lidar sensor, that is, the optical transceiver includes a transmitter module, a receiver module, a rotor, and a second driver. Both the transmitter module and the receiver module are connected to the rotor. The second driver transmits power to the rotor through a cable or a chain and may be implemented by a motor. The second driver rotates the rotor in a specific direction to rotate the transmitter module and the receiver module.

The optical transceiver may set a rotation period of the first driver based on a sampling period, a movement period, and a time according to a movement path of light. Shapes, rotating directions, and rotation periods of the reflector of the transmitter module and the reflector of the receiver module may be set to be the same or different depending on the design to be implemented. Further, the reflector of the transmitter module and the reflector of the receiver module may operate by sharing the first driver or operate by separate powers.

The first angle adjusting unit moves at a predetermined period to change the normal line of the first reflection area and the normal line of the second reflection area. The first angle adjusting unit synchronizes the period of the first reflection area and the period of the second reflection area and matches the normal direction of the first reflection area and the normal direction of the second reflection area.

The exemplary embodiment may be easily transformed to a frame not only for a three-scanning Lidar, but also for a two-dimensional scanning Lidar. The polygonal mirror is replaced with a normal lens tube to be used as the two-dimensional scanning Lidar.

The optical transceiver 100 may be implemented by a plurality of scan lines. Angles of the plurality of reflectors are set to be different from each other to detect obstacles in a vertical direction and a ground direction, simultaneously. For example, the scan line may be set to be 45 degrees and 60 degrees and two or more scan lines may be configured.

The three-dimensional Lidar sensor may include a first angle sensor and a second angle sensor.

When the first driver rotates the reflector at a first angle, the first angle sensor measures an rotation angle of the reflector. The first angle sensor calculates an angle at which a center axis of the reflector rotates or an angle formed from a reference that a reflection surface is set.

When the second driver rotates the rotor at a second angle, the second angle sensor measures the rotation angle of the rotor. The second angle sensor may be implemented by an encoder or a hall sensor. An incremental encoder or a one-shot hall sensor may be applied.

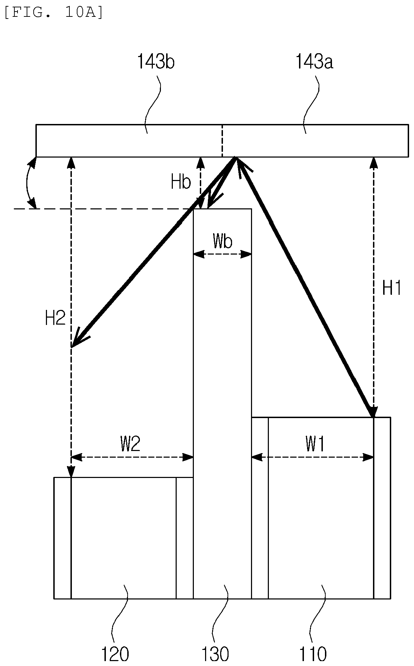

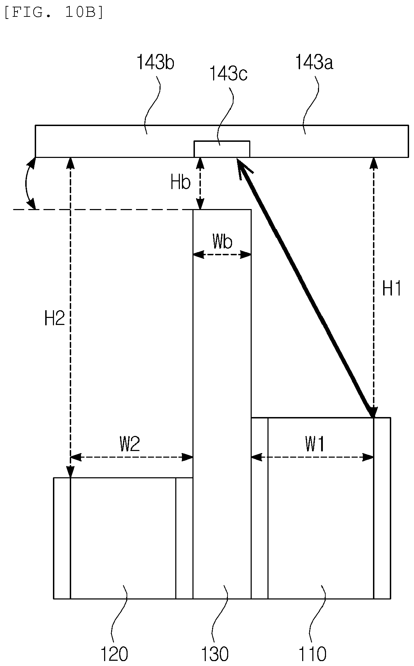

In FIGS. 10A to 10D, a blocking wall, a reflector, an optical transmitting unit, and an optical receiving unit of an optical transceiver are illustrated.

The optical transmitting unit 110 and the optical receiving unit 120 are located to be opposite to a reflector of the first angle adjusting unit. The optical transmitting unit 110 and the optical receiving unit 120 are located in one direction or two directions with reference to the reflector. The reflector is divided into the first reflection area 143a and the second reflection area 143b. The reflector may include a light absorption area 143c.

The light blocking wall 130 is disposed between the optical transmitting unit 110 and the optical receiving unit 120 and forms a blocking area with respect to the first angle adjusting unit so that light transmitted from the optical transmitting unit 110 is reflected or scattered from the first reflection area 143a of the first angle adjusting unit or the reflected or scattered light does not reach the optical receiving unit 120.

The light blocking wall 130 may form the blocking area using a length relationship including a distance Hb from the first angle adjusting unit to the light blocking wall, a thickness Wb of the light blocking wall 130, a distance from the first reflection area 143a to the optical transmitting unit 110, a distance W1 from the light blocking wall 130 to the optical transmitting unit 110, a distance H2 from the second reflection area 143b to the optical receiving unit 120, a distance W2 from the light blocking wall 130 to the optical receiving unit, a reference angle of the first angle adjusting unit, and a movement angle of the reflector, or a combination hereof. W1 includes a thickness of the optical transmitting unit 110 and W2 includes a thickness of the optical receiving unit 120. Wb blocks the movement path of the scattered or reflected light. H2 may be set to be longer than H1. Hb and H2 may be set to have an appropriate length so that light which passes through Wb does not reach the optical receiving unit. When the height of the blocking wall may be set to be higher than the first reflection area 143a or the second reflection area 143b.

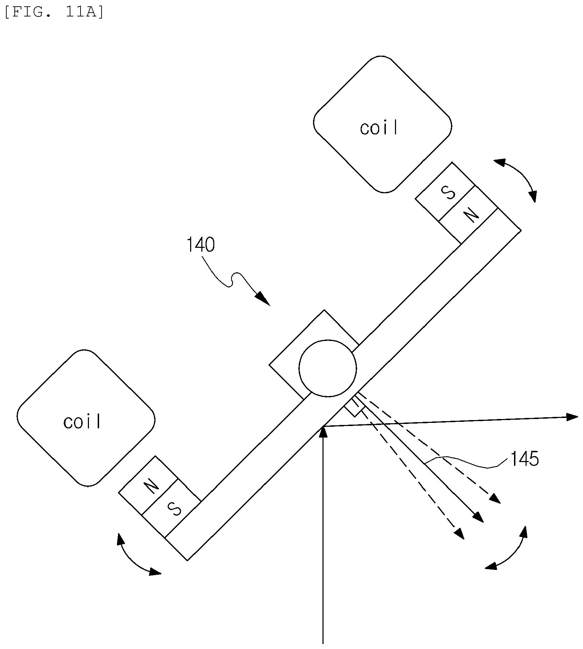

FIGS. 11A to 11D illustrate a first driver of an optical transceiver.

The reflector which is a movable mirror may move using an electromagnetic force by a magnet and a coil. The first angle adjusting unit 140 includes a reflector having a first reflection area and the second reflection area and the reflector is installed in a frame of the optical transceiver to be movable. The reflector may move using the electromagnetic force of the magnet attached to the reflector and the coil installed in the frame.

Referring to FIG. 11A, a smooth hinge or a center axis is provided at a center of the reflector and permanent magnets are located on both ends (or points close to the ends). The coil is located on an end (or a point close to the end) of a rear surface of the reflection surface. When a current is applied the coil by periodically changing the direction, the reflector shakes. Here, since the force caused by the magnet and the coil is small, in order to move the reflector or the normal line 145 of the reflector at a high frequency, the hinge needs to be formed of a material to be smoothly moved. As the tension of the hinge is strong, the reflector may move at a small force, but it is difficult to make a motion of a high frequency. The reflector may move by the center axis.

The movable mirror may use an MEMS technique or a piezo motor or rotates a polyhedron.

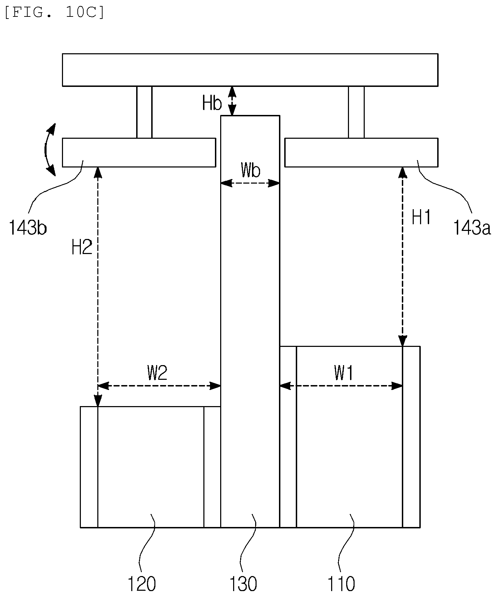

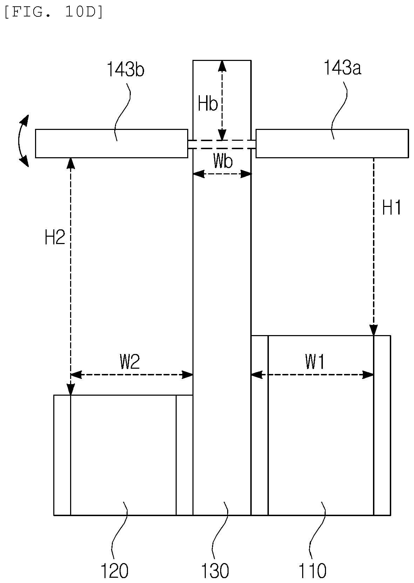

The first angle adjusting unit 140 includes a first reflector having a first reflection area and a second reflector having a second reflection area and the first reflector and the second reflector are formed to be a polygonal column to move while rotating. The first reflector having the first reflection area is located in a transmission path of the light and the second reflector having the second reflection area is located in a reception path of the light. The structure in which the reflectors are separated is illustrated in FIGS. 10C and 10D.

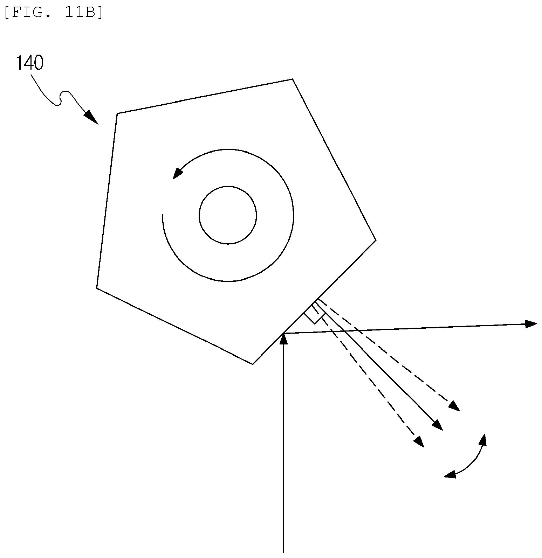

The structure illustrated in FIG. 11A has a low vertical scanning speed so that a manner that a polygon is connected to the motor to be rotated may be applied. In FIG. 11B, the reflector which is a movable mirror is formed to be a polygonal column to move while rotating the center axis. The optical transceiver adjusts a relationship of the rotational speed of the reflector and an emission speed of the light source to adjust a slope of the normal line of the reflected surface at every periodical timing.

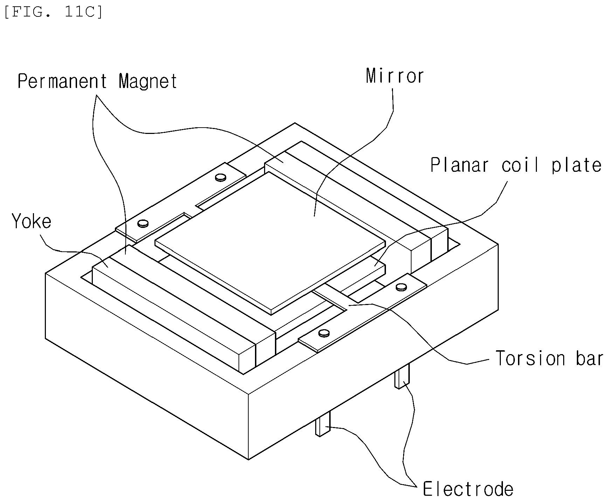

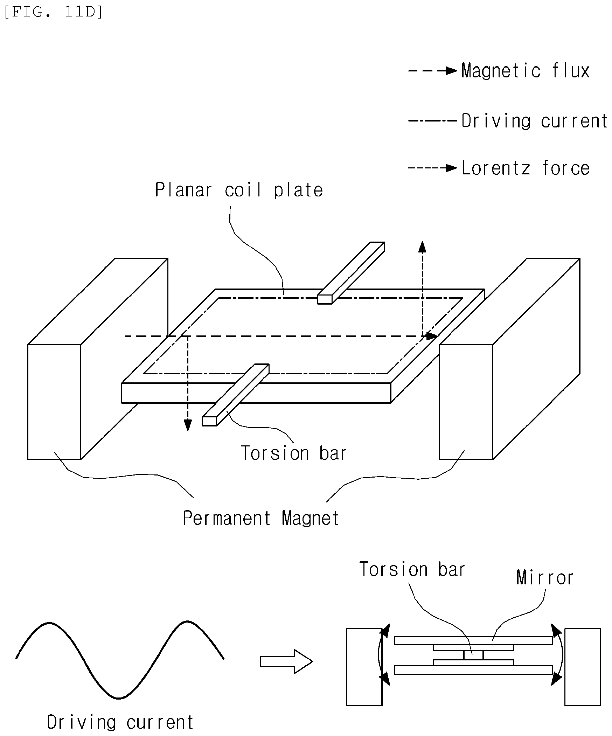

The first angle adjusting unit illustrated in FIG. 11C operates by a principle which is opposite to the principle of FIG. 11A. The first angle adjusting unit includes a reflector having a first reflection area and a second reflection area and the reflector is installed in the frame of the optical transceiver to be movable. The reflector may move using an electromagnetic force of the magnet installed in the frame and the coil attached to the reflector. A yoke connected to the magnet forms a magnetic flux path. Referring to FIG. 11D, a force which is applied to the reflector may be adjusted by changing the intensity and direction of the current flowing through the coil.

In the exemplary embodiments, the optical transmitting unit and the optical receiving unit are located on the same direction with respect to the reflected surface and the transmission path and the reception path of the light are separated by the light blocking wall and a movement path of the light is shortened so that the Lidar sensor may measure the pin point while minimizing an error due to the echo phenomenon and the volume of the Lidar sensor may be minimized.

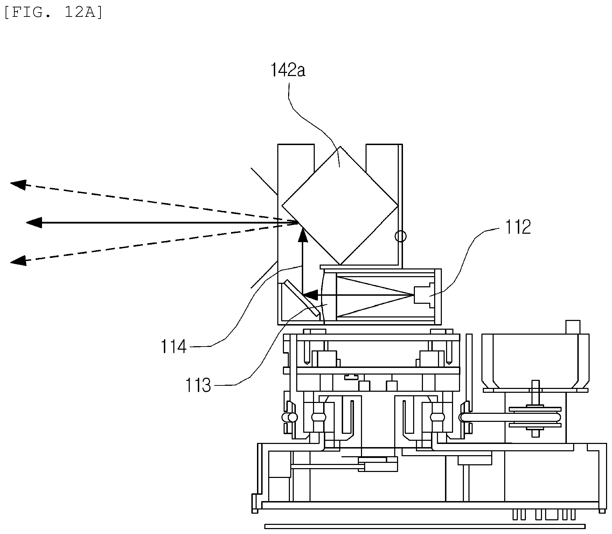

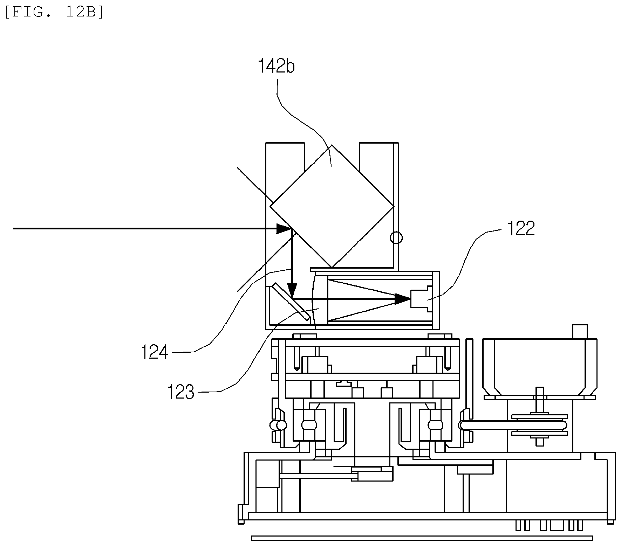

In the Lidar sensor, the transmission path of the light is formed by the first reflection area in the optical transmitting unit and the reception path of the light is formed by the optical receiving unit in the second reflection area. When the first reflection area and the second reflection area are directed to the same direction, the Lidar sensor moves at a predetermined angle. In FIG. 12A, the transmission path of the light is formed in the order of a light source 112, a transmitting lens 113, a transmitting reflector 114, a first reflector 142a, and a target. As needed, the reception path of the light may be formed in the order of the light source 112 and the first reflector 142a. In FIG. 12B, the reception path of the light is formed in the order of the target, a second reflector 142b, a receiving reflector 124, a receiving lens 123, and a photo diode 122. As needed, the reception path of the light may be formed in the order of the second reflector 142a and the photo diode 122. The first reflector and the second reflector may be connected by passing through the light blocking wall or over the light blocking wall or may be integrally implemented.

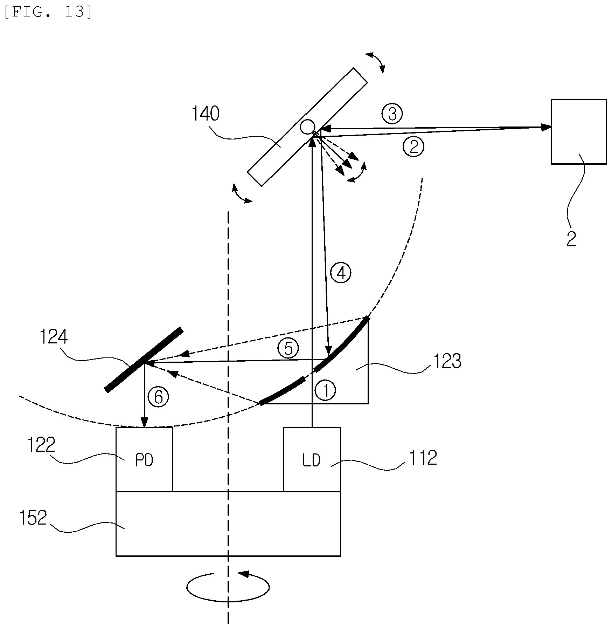

FIG. 13 illustrates a structure of an optical transceiver according to another exemplary embodiment of the present disclosure and a moving path of light. Referring to FIG. 13, light emitted from the light source 112 may form a movement path from (i) to (vi).
(i) Light emitted from the light source 112 passes a hole of the first mirror 123 to move to the second mirror 140 along a straight path. The light emitted from the light source 112 may be collimated through a collimator. The collimator makes the incident light parallel.
(ii) The light reflected from the moving second mirror 140 moves to the target 2 according to the angle of the second mirror 140.
(iii) The light reflected from the target 2 moves to the second mirror 140 along a straight path.
(iv) The light reflected from the moving second mirror 140 moves to the first mirror 123. The first mirror 123 is formed to have a curved surface to have a focal point at which the light reflected from the reflected surface of the first mirror 123 is gathered. A size of the reflected surface of the first mirror 123 is appropriately determined based on distribution of the light reflected according to the angle of the moving second mirror 140. The first mirror 123 performs condensing and reflecting functions using a parabolic reflection mirror (in which a lens and a mirror are implemented together). That is, the reflected light is gathered by the second mirror 140 to be sent to the reflector 124.
(v) The light gathered in the first mirror 123 moves to the reflector 124. The reflector 124 is located at a focal point by the curved surface of the first mirror 123. The reflector 124 receives light reflected from the first mirror 123 and reflects the light to the photo diode 122.
(vi) The light reflected from the reflector 124 moves to the photo diode 122 along a straight path. The reflected light rays may form parallel straight paths or one straight path before being incident to the photo diode 122. The photo diode 122 is located on a virtual straight path which passes through the focal point of the first mirror 123.

As illustrated in FIG. 13, a hole of the first mirror, the second mirror, the reflector, and the photo diode are disposed to adjust the movement path of the light. Therefore, the light source and the photo diode are disposed to be adjacent to each other to minimize the size of the photo transceiver 100 and the rotor 152 and minimize a rotation radius of the rotor 152.

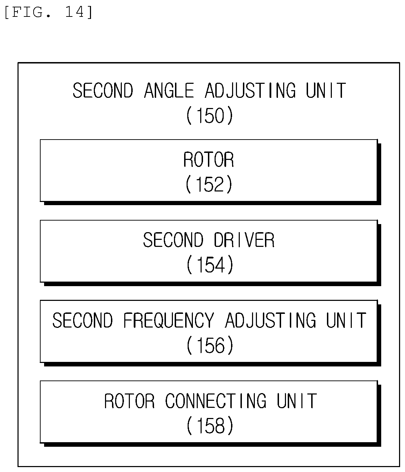

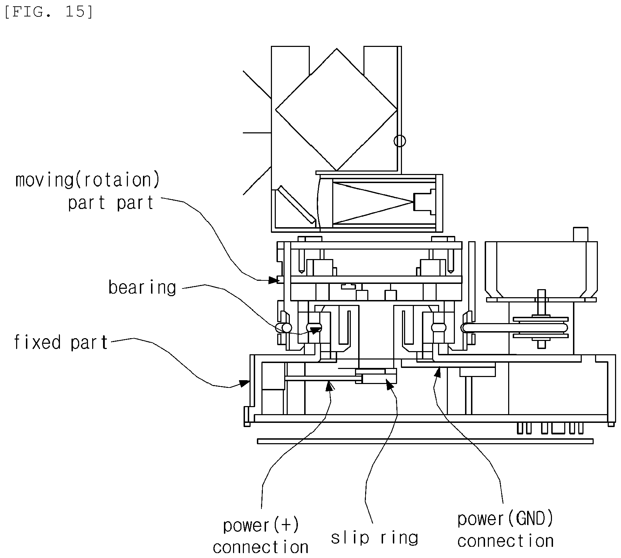

FIGS. 14 and 15 illustrate a second angle adjusting unit of an optical transceiver.

The second angle adjusting unit 150 includes a rotor 152, a second driver 154, a second frequency adjusting unit 156, and a rotor connecting unit 160. In the rotor 152, the optical transmitting unit, the optical receiving unit, and the light blocking wall are attached to rotate. The second driver 154 is connected to the rotor 152 to rotate the rotor 152. The second frequency adjusting unit 156 adjusts a rotating speed of the rotor 152. The second frequency adjusting unit 156 may adjust the rotor 152 to rotate at 5 to 10 Hz. The rotor connecting unit 160 connects a base of the optical transceiver to the rotor 152. The rotor connecting unit transmits power into the rotor and performs data communication.

The rotor connecting unit 160 includes a power line to which a conductor is in physical contact with the rotor 152 to transmit power and a data communication unit which is wirelessly connected to the rotor 152 in the rotor 152 to transmit data thereto.

The power transmitted from the base to be in contact with an upper portion of the conductor through the conductor. The contact portion is implemented to consistently push through a spring in order to ensure a sufficient durability. The power line applies a pressure to a worn portion of the conductor in a direction in which the conductor is in contact. Even though the conductor is worn out due to the consistent friction, in order to avoid a power transferring problem, a portion which transmits the power from a lower portion to an upper portion may be formed of a relatively softer material than that of the conductor. A thickness of a portion which transmits power is sufficiently ensured and the spring pushes from a lower end to an upper end.

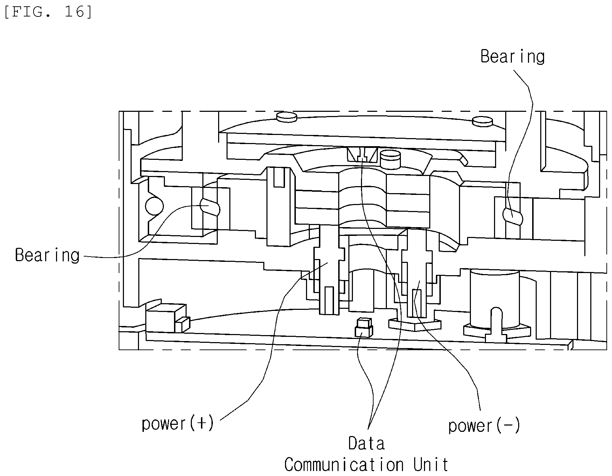

A communication line which transmits data is vulnerable to an electrical noise which is emitted from the product and an emission noise generated from a serge or a diode switching, so that the communication line is wirelessly connected. In order to completely remove lines, the communication part may employ an infrared communication method. Referring to FIG. 16, an infrared transmitter and an infrared receiver are provided at a center of the upper rotor and the lower base so that the data may be transmitted and received in both directions. In order to minimize the interference of the laser and the light, a shielding film is installed so that the laser and the infrared ray are not interfered from each other.

The distance measuring apparatus may adjust a vertical scanning motion of a reflector of the first angle adjusting unit through a controller implemented by an FPGA. The controller periodically transmits +/- signals to swing the reflector. The reflector swings at -10 degrees to +10 degrees. When the signal has a periodic waveform, an angle of the mirror is constant in accordance with a periodical timing. If necessary, a position sensitive diode (PSD) sensor is mounted on a rear surface of the mirror to measure an angle. The distance measuring apparatus may adjust a horizontal rotating motion of the rotor through the controller implemented by an FPGA. The controller controls a rotating speed of the rotor and measures a rotating angle through an encoder which is provided inside or outside the rotor.

The controller which adjusts the vertical scanning motion of the reflector and the controller which adjusts the horizontal rotating motion of the rotor may be implemented by independent modules.

The distance measuring unit receives a vertical angle from the controller which adjusts the vertical scanning motion of the reflector and receives a horizontal angle from the controller which adjusts the horizontal rotating motion to store the vertical angle and the horizontal angle. The distance measuring apparatus receives light emitted from the light source using the photo diode to calculate a time of flight. The distance measuring apparatus transmits the vertical angle, the horizontal angle, and the time of flight to the host through the interface. The time of flight may be corrected or calibrated. The distance measuring apparatus may perform filtering for removing a noise for at least one of the vertical angle, the horizontal angle, and the time of flight and then transmit data to the host.

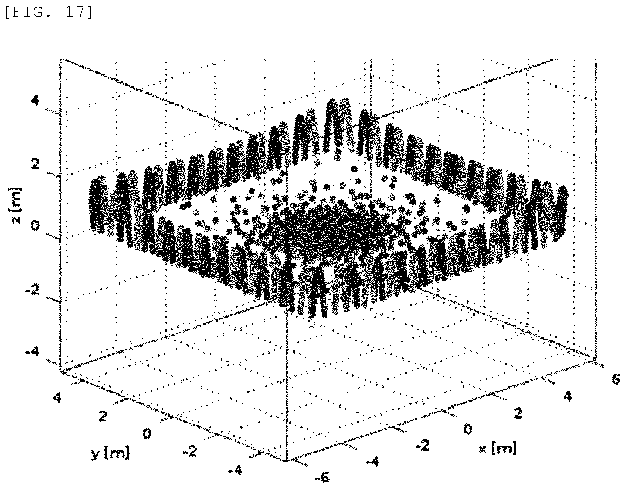

FIG. 17 is a view illustrating three-dimensional information (point group data) obtained by a distance measuring apparatus using an optical transceiver. A position unit of the three-dimensional point group data is meter. The distance measuring apparatus may obtain point group data for a floor and a wall.

A numerical value set by the point adjusting unit 112, the reference angle adjusting unit 148, the first driver 144, the first frequency adjusting unit 146, the second driver 154, and the second frequency adjusting unit 156 may be appropriately set depending on a design to be implemented.

A plurality of components included in the Lidar sensor (optical transceiver) and the distance measuring apparatus are coupled to each other to be implemented by at least one module. The components are connected to a communication path which connects a software module or a hardware module in the apparatus to organically operate between the components. The components communicate with each other using one or more communication buses or signal lines.

The distance measuring apparatus and a distance measuring unit may be implemented in a logic circuit by hardware, firm ware, software, or a combination thereof or may be implemented using a general purpose or special purpose computer. The apparatus may be implemented using hardwired device, field programmable gate ware (FPFA) or application specific integrated circuit (ASIC). Further, the apparatus may be implemented by a system on chip (SoC) including one or more processors and a controller.

The distance measuring apparatus and the distance measuring unit may be mounted in a computing device provided with a hardware element as a software, a hardware, or a combination thereof. The computing device may refer to various devices including all or some of a communication device for communicating with various devices and wired/wireless communication networks such as a communication modem, a memory which stores data for executing programs, and a microprocessor which executes programs to perform operations and commands.

The operation according to the exemplary embodiment of the present disclosure may be implemented as a program command which may be executed by various computers to be recorded in a computer readable medium. The computer readable medium indicates an arbitrary medium which participates to provide a command to a processor for execution. The computer readable medium may include solely a program command, a data file, and a data structure or a combination thereof. For example, the computer readable medium may include a magnetic medium, an optical recording medium, and a memory. The computer program may be distributed on a networked computer system so that the computer readable code may be stored and executed in a distributed manner. Functional programs, codes, and code segments for implementing the present embodiment may be easily inferred by programmers in the art to which this embodiment belongs.

The present embodiments are provided to explain the technical spirit of the present embodiment and the scope of the technical spirit of the present embodiment is not limited by these embodiments. The protection scope of the present embodiments should be interpreted based on the following appended claims and it should be appreciated that all technical spirits included within a range equivalent thereto are included in the protection scope of the present embodiments.

## Claims

1. An optical transceiver, comprising:
a first angle adjusting unit including a first reflection area and a second reflection area;
an optical transmitting unit which transmits light to the first reflection area of the first angle adjusting unit;
an optical receiving unit which receives light from the second reflection area of the first angle adjusting unit; and
a light blocking wall which separates a movement path of the transmitted light and a movement path of the received light.

2. The optical transceiver according to claim 1, wherein the light blocking wall is installed between the optical transmitting unit and the optical receiving unit and forms a blocking area with respect to the first angle adjusting unit such that the light which is transmitted by the optical transmitting unit is reflected or scattered from the first reflection area of the first angle adjusting unit and the reflected or scattered light does not reach the optical receiving unit so that the transmitted light moves through a path to be reflected from the first reflection area and light reflected from a target moves through a path to be reflected from the second reflection area.

3. The optical transceiver according to claim 1, wherein the first angle adjusting unit includes a first reflector having the first reflection area and a second reflector having the second reflection area and the first reflector and the second reflector are located in a first space and a second space separated by the light blocking wall, respectively.

4. The optical transceiver according to claim 1, wherein the light blocking wall forms the blocking area using a length relationship including a distance Hb from the first angle adjusting unit to the light blocking wall, a thickness Wb of the light blocking wall, a distance from the first reflection area to the optical transmitting unit, a distance W1 from the light blocking wall including the thickness of the optical transmitting unit to the optical transmitting unit, a distance H2 from the second reflection area to the optical receiving unit, a distance W2 from the light blocking wall including the thickness of the optical receiving unit to the optical receiving unit, a reference angle of the first angle adjusting unit, and a movement angle of the reflector, or a combination hereof.

5. The optical transceiver according to claim 1, wherein the first angle adjusting unit moves at a predetermined period to change the normal line of the first reflection area and the normal line of the second reflection area and the first angle adjusting unit synchronizes a period of the first reflection area and a period of the second reflection area and makes a normal line direction of the first reflection area and a normal line direction of the second reflection area parallel to each other.

6. The optical transceiver according to claim 1, wherein the first angle adjusting unit moves by a bending motion, a resonant motion, a reciprocating motion, a seesaw motion, a rotational motion, and a combination thereof.

7. The optical transceiver according to claim 1, wherein the first angle adjusting unit includes a reflector having the first reflection area and the second reflection area and the reflector is installed in a frame of the optical transceiver to be movable and moves using an electromagnetic force of a magnet attached to the reflector and a coil installed in the frame.

8. The optical transceiver according to claim 1, wherein the first angle adjusting unit includes a reflector having the first reflection area and the second reflection area and the reflector is installed in a frame of the optical transceiver to be movable and moves using an electromagnetic force of a magnet installed in the frame and a coil attached to the reflector.

9. The optical transceiver according to claim 1, wherein the first angle adjusting unit includes a first reflector having the first reflection area and a second reflector having the second reflection area and the first reflector and the second reflector are formed to be a polygonal column to move while rotating.

10. The optical transceiver according to claim 1, further comprising:
a first driver which moves a reflector of the first angle adjusting unit;
a first frequency adjusting unit which adjusts a period when the reflector of the first angle adjusting unit moves;
a reference angle adjusting unit which adjusts an angle at which the reflector of the first angle adjusting unit is installed, or
a combination thereof.

11. The optical transceiver according to claim 1, wherein the optical transmitting unit includes a light source which emits light, a transmitting reflector which reflects the light or a combination thereof and the optical receiving unit includes a photo diode which receives light to convert the light into an electrical signal, a receiving reflector which reflects the light, a point adjusting unit which adjusts the number of point group data obtained per unit time by adjusting a light emitting speed of the light source based on a predetermined sampling period, or a combination thereof.

12. The optical transceiver according to claim 1, further comprising:
a second angle adjusting unit,
wherein the second angle adjusting unit includes the optical transmitting unit, the optical receiving unit, a rotor which is attached to the light blocking wall to rotate, a second driver which is connected to the rotor to rotate the rotor, and a rotor connecting unit which connects a base of the optical transceiver and the rotor.

13. The optical transceiver according to claim 12, wherein the rotor connecting unit includes a power line to which a conductor is in physical contact with the rotor to transmit power and a data communication unit which is wirelessly connected to the rotor in the rotor to transmit data thereto and the power line applies a pressure to a worn portion of the conductor in a direction in which the conductor is in contact.

14. A distance measuring apparatus, comprising:
an optical transceiver which emits light to a target by a start control signal and receives light reflected from the target to convert the reflected light into an electrical signal; and
a distance measuring unit which converts the electrical signal to generate a stop control signal and calculates a time of flight based on a time difference of the start control signal and the stop control signal to measure a distance,
wherein the optical transceiver includes:
a first angle adjusting unit including a first reflection area and a second reflection area;
an optical transmitting unit which transmits light to the first reflection area of the first angle adjusting unit;
an optical receiving unit which transmits light to the second reflection area of the first angle adjusting unit; and
a light blocking wall which separates a movement path of the transmitted light and a movement path of the received light.

15. A moving object, comprising:
a distance measuring apparatus which calculates a flight time between a moving object and a target to measure a distance to the target; and
a moving device which is implemented to move the moving object based on the distance to the target and
wherein the distance measuring apparatus includes:
an optical transceiver which emits light to a target by a start control signal and receives light reflected from the target to convert the reflected light into an electrical signal; and
a distance measuring unit which converts the electrical signal to generate a stop control signal and calculates a time of flight based on a time difference of the start control signal and the stop control signal to measure a distance, and
the optical transceiver includes:
a first angle adjusting unit including a first reflection area and a second reflection area;
an optical transmitting unit which transmits light to the first reflection area of the first angle adjusting unit;
an optical receiving unit which transmits light to the second reflection area of the first angle adjusting unit; and
a light blocking wall which separates a movement path of the transmitted light and a movement path of the received light.
